Europäisches Patentamt

European Patent Office

Office européen des brevets

(11) Publication number: **0 509 509 A1**

## EUROPEAN PATENT APPLICATION

(21) Application number: **92106630.4**

(22) Date of filing: **16.04.92**

(51) Int. Cl.5: **A23G 9/02**

(30) Priority: **17.04.91 JP 85408/91**

(43) Date of publication of application:
**21.10.92 Bulletin 92/43**

(84) Designated Contracting States:
**DE FR GB IT**

(71) Applicant: **LOTTE CO., LTD**
**No. 20-1, Nishi-Shinjuku 3-chome**
**Shinjuku-ku Tokyo(JP)**

(72) Inventor: **Sugiyama, Koichi**
**3-6-2 Kato Heights, Bessyo**
**Urawa-shi, Saitama-ken(JP)**
Inventor: **Nakagawa, Yujiro**
**5-14-27 Nakazuma**
**Ageo-shi, Saitama-ken(JP)**
Inventor: **Yokota, Yoshihiro**
**2-24-8 Oinezuka**
**Konosu-shi, Saitama-ken(JP)**

(74) Representative: **Berendt, Thomas, Dr.rer.nat.**
**Dipl.-Chem.**
**Patentanwälte Dr.rer.nat. Dipl.-Chem. Th.**
**Berendt Dr.Ing. Hans Leyh Dipl.-Ing. Hartmut**
**Hering Innere Wiener Strasse 20**
**W-8000 München 80(DE)**

(54) **Frozen dessert in which cocoa butter is used.**

(57) It is intended to provide a frozen dessert provided with a real cocoa flavor and taste having a mouth-feel of sharply melting property. Thus, an amount of cocoa butter sufficient to give the real cocoa flavor and taste is used as vegetable fat and oil. It is most preferable that the amount of cocoa butter is 3 to 20% by weight.

EP 0 509 509 A1

The present invention relates to a frozen dessert in which cocoa butter is used, in particular, relates to a frozen dessert which can be obtained by adding cocoa butter to a frozen dessert positively and in a large amount, is provided with a real cocoa flavor and taste, and has a sharply melting property in the mouth.

Cocoa butter has been mainly used as a material for fat and oil for chocolate, which was not used for frozen dessert as fat and oil in a large amount and positively.

Generally, for frozen desserts such as ice cream, milk fat, coconut oil, palm oil, rapeseed oil and the like are used. Some frozen desserts have a flavor and taste like chocolate, however, although the flavor and taste of such chocolate ice articles ultimately originates from chocolate fat, as cocoa butter (chocolate fat) in the conventional frozen dessert, only those were present originating from cacao mass, cocoa, bitter and chocolate containing a relatively small amount of chocolate fat added as a material for frozen dessert in order to give a flavor and taste to the chocolate ice and the like, in which a final content was generally about 0 to 1.5%, and cocoa butter was of course not used directly as a material for frozen desserts.

Cocoa butter has a property of sharp melting at or near the body temperature. Accordingly, a chocolate in which it is used as a material for fat and oil becomes to have a sharply melting property in the mouth because the cocoa butter immediately melts in the oral cavity. On the contrary, fat and oil which have been hitherto generally used for frozen dessert cannot give the sharply melting property in the mouth as done by cocoa butter.

It is an object of the present invention to provide a frozen dessert provided with a real cocoa flavor and taste having a mouth-feel of sharply melting property.

According to the present invention, there is provided a frozen dessert in which cocoa butter is used wherein an amount of cocoa butter sufficient to give a real cocoa flavor and taste is used as vegetable fat and oil.

It is preferable that the amount of cocoa butter is not more than 20% by weight.

It is preferable that the amount of cocoa butter is 3 to 20% by weight.

If the amount of cocoa butter is not more than 3% by weight, the real chocolate flavor and taste is somewhat reduced, while if it is not less than 20% by weight, an oily texture appears with respect to the sense of eating, so that it is most preferable that the using amount of cocoa butter in the present invention is 3 to 20% by weight.

When the frozen dessert in which cocoa butter is used according to the present invention is produced, by restricting a coloring agent, there can be provided a white chocolate frozen dessert provided with a real cocoa flavor and taste having a mouth-feel of sharply melting property in the mouth.

In addition, by using deodorized cocoa butter, frozen desserts having various flavors and tastes (for example, fruits, nuts and the like) can be provided.

Incidentally, ice cream can be exemplified as a representative frozen dessert, however, the frozen dessert according to the present invention is not limited thereto.

In the present invention, as an application of cocoa butter to frozen dessert, the chocolate fat (cocoa butter) has been used in a large amount and positively in order to realize the real chocolate flavor and taste, not as in the prior art in which it was used only for giving a little flavor and taste as in the case in which cacao mass, cocoa, chocolate and the like were used.

Conventionally, in chocolate ice cream and the like, cocoa, cacao mass, chocolate and the like were used as materials for giving a little flavor and taste, however, no real and original chocolate feeling could be expected.

The chocolate dough is defined in the chocolate production to be such one in which cacao mass, cocoa butter cocoa cake or cocoa powder prepared from cacao beans is used as a material, and sugar, mild products, other fats and oils, emulsifiers, spices and the like may be optionally added (Article 2-2 of the Rule). Namely, the cacao material is defined as essential one.

In the present invention, cocoa butter in the cacao material which has not been hitherto used for frozen desserts is used, thereby it is made possible to realize the real chocolate flavor and taste, and further there is provided the frozen dessert having a good melting property in the mouth as a mouth-feel to which the sharply melting property in the mouth of cocoa butter is given.

According to the present invention, there is provided a frozen dessert provided with a real cocoa flavor and taste having a mouth-feel of sharply melting property owing to cocoa butter added positively and in a large amount.

The frozen dessert according to the present invention uses cocoa butter as the material for fat and oil, thereby it has a characteristic feature provided with the mouth-feel and (sharply) melting property in the mouth being different from those of conventional fats and oils (milk fat, vegetable fat).

Further, when cocoa butter is applied to the frozen dessert as described above, the real chocolate flavor and taste possessed by cocoa butter is realized, as well as it becomes possible to realize the flavor and taste as the white chocolate frozen dessert being not bound by the so-called chocolate color, and by using the deodorized cocoa butter, the application is also possible as the frozen desserts having various flavors and tastes (for example, fruits, nuts and the like). Namely, the present invention makes it possible to provide the frozen dessert having the feature of the mouth-feel and the sharply melting property in the mouth which have not given in the prior art, simultaneously with which a new application of cocoa butter (chocolate fat) has been developed.

The present invention will be further explained in detail with reference to examples hereinafter, however, the present invention is not limited to the following examples only.

Example 1

Materials were blended in accordance with a formulation shown in Table 1 and a frozen dessert was produced.

When a mixture was prepared, the materials were heated and mixed to perform homogenization to sterilize and cool followed by aging.

The prepared mixture was subjected to freezing, and a suitable amount of overrun was introduced to harden to produce a frozen dessert.

Example 2

Materials were blended in accordance with a formulation shown in Table 1, and a frozen dessert was produced by the same method as Example 1.

Comparative example 1

Materials were blended in accordance with a formulation shown in Table 1, and a frozen dessert was produced by the same method as Example 1.

Table 1

| Formulation of frozen desserts | | | |
|---|---|---|---|
| | Example 1 | Example 2 | Comparative example 1 |
| Cocoa butter | 12.0 | 6.0 | |
| Coconut oil | | | 12.0 |
| Raw cream | 5.0 | 8.0 | 5.0 |
| Skim milk powder | 1.0 | 5.0 | 1.0 |
| Sugar | 16.0 | 16.0 | 16.0 |
| Corn syrup | 3.0 | 5.0 | 3.0 |
| Cocoa | 3.0 | 3.0 | 3.0 |
| Stabilizer | 0.2 | 0.2 | 0.2 |
| Emulsifier | 0.2 | 0.2 | 0.2 |
| Flavor | 0.1 | 0.1 | 0.1 |

Panelist test

The frozen desserts produced in Example 1 and Comparative example 1 were used, and panelist tests were performed by 10 panelists for the chocolate flavor and taste and the mouth-feel (melting property in the mouth).

Results are shown in Table 2. Incidentally, also in a panelist test using the frozen dessert produced in Example 2, the same result was obtained.

## Table 2

## Results of the panelist tests

For the chocolate flavor and taste (Which chocolate has the chocolate feeling?)

|  | Panelist No. 1 2 3 4 5 6 7 8 9 10 | Evaluation ratio(%) |
|---|---|---|
| Example 1 | ○ ○ ○   ○ ○ ○ ○ ○ | 90 |
| Comparative example 1 | ○ | 10 |

For the mouth-feel (Which chocolate has a better melting property in the mouth?)

|  | Panelist No. 1 2 3 4 5 6 7 8 9 10 | Evaluation ratio(%) |
|---|---|---|
| Example 1 | ○ ○ ○ ○ ○ ○ ○   ○ ○ | 90 |
| Comparative example 1 | ○ | 10 |

As clarified from Table 2, the frozen dessert in which cocoa butter is used according to the present invention is provided with the real cocoa flavor and taste having the sharply melting property in the mouth owing to the cocoa butter added positively and in a large amount as compared with the conventional frozen dessert.

**Claims**

1. A frozen dessert in which cocoa butter is used wherein an amount of cocoa butter sufficient to give a real cocoa flavor and taste is used as vegetable fat and oil.

2. The frozen dessert according to claim 1 wherein the amount of cocoa butter is not more than 20% by weight.

3. The frozen dessert according to claim 1 wherein the amount of cocoa butter is 3 to 20% by weight.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 663 176 (SIDNEY ARDEN)<br>* column 3, line 67 - column 4, line 24; claim 1 *<br>--- | 1-3 | A23G9/02 |
| A | PATENT ABSTRACTS OF JAPAN<br>vol. 13, no. 111 (C-577)(3459) 16 March 1989<br>& JP-A-63 287 446 ( SNOW BRAND MILK PROD. CO. LTD. ) 24 November 1988<br>* abstract *<br>----- | 1-3 | |
| | | | TECHNICAL FIELDS SEARCHED (Int. Cl.5)<br><br>A23G |

The present search report has been drawn up for all claims

| Place of search | Date of completion of the search | Examiner |
|---|---|---|
| BERLIN | 14 JULY 1992 | ALVAREZ ALVAREZ C. |